# EUROPEAN PATENT SPECIFICATION

(11) **EP 1 291 551 B1**
(45) Date of publication and mention of the grant of the patent: **19.04.2006**
(21) Application number: 02255972.8
(22) Date of filing: 28.08.2002
(51) Int. Cl.: F16F 15/00

(54) **Control system for vibration employing piezoelectric strain actions**
Piezoelektrische Elemente benutzendes Schwingungsregelungssystem
Système de contrôle de vibrations utilisant une action piezoéléctrique

(30) Priority: 11.09.2001 US 950406
(43) Date of publication of application: 12.03.2003
(73) Proprietor: BorgWarner Inc., Auburn Hills, MI 48326-2872 (US)
(72) Inventor: Patton, Mark E., Dryden, NY 13053 (US)
(74) Representative: Lerwill, John

(56) References cited:
- EP-A- 0 470 064
- EP-A- 0 806 589
- EP-A- 0 926 387
- WO-A-01/89005
- WO-A-02/42854
- WO-A-92/18975
- DE-A- 10 042 617
- US-A- 5 783 898
- PATENT ABSTRACTS OF JAPAN vol. 017, no. 133 (M-1383), 19 March 1993 (1993-03-19) & JP 04 312236 A (BROTHER IND LTD), 4 November 1992 (1992-11-04)

## Description

### BACKGROUND OF THE INVENTION

### FIELD OF THE INVENTION

The invention pertains to the field of vibration control. More particularly, the invention pertains to devices for passive and active control of noise, vibration and harshness in motor vehicles.

### DESCRIPTION OF RELATED ART

Vibration and acoustic noise in motor vehicles present a long-standing problem for the automotive industry, and attempts are constantly being made to reduce vibration and noise levels. It is known in the art to reduce acoustic noise by reducing the vibrations of the panels separating the engine compartment from the passenger compartment, such as a dashboard or firewall, and to prevent the transmission of vibrations through the panels to achieve a lower acoustic noise level in motor vehicles. For example, the rigidity of the panel may be increased by increasing the thickness of the panel, or by providing ribs and/or beads in the panel. Alternatively or in addition, an asphalt sheet is thermally bonded to the panel, or viscoelastic material is sprayed over the panel to add a damping property to the panel. Such methods are well known to be effective in reducing the vibration transmissivity of the panel.

However, the foregoing measures have inherent problems, such as inevitably increasing the weight of the vehicle body. Further, the resulting increase in the thickness of the panel reduces the space available for the passenger compartment. The resulting increase in the mass of the panel also lowers the resonance frequency of the panel, such that the insulation of low frequency noises may not be achieved in a satisfactory manner.

In view of such problems of the prior art, the present invention provides passive and active vibration control to reduce vibration, by employing piezoelectric strain actuators to passively absorb and dissipate vibration of an adjacent structure (e.g., engine timing cover), or actively drive actuators to oppose structural motion and/or vibration.

Piezoelectricity is a property of certain classes of crystalline materials, including natural crystals of quartz, Rochelle salt and tourmaline, as well as manufactured ceramics, such as barium titanate and lead zirconate titanates (*i.e.,* PZT). When mechanical pressure is applied to a piezoelectric material (*e.g*., by pressing, squeezing, stretching, etc.), the crystalline structure produces a voltage, which is proportional to the applied pressure. Conversely, when an electric field is applied, the crystalline structure changes shape, thus producing dimensional changes in the material.

In most cases, the same element can be used to perform either task. For a positive voltage applied in the z-direction to a piezo material, a solid rectangular piece will expand in one direction (z) and contract in the other two (x and y); if the voltage is reversed, the piece will contract in the z-direction and expand in the x- and y-directions. Thus, piezo motors (*i.e.,* actuators) convert electrical energy to mechanical energy, and piezo generators (*i.e.,* sensors) convert mechanical energy into electrical energy.

A bi-morph piezo actuator comprises two flat, thin layers of piezoelectric material permanently bonded together and wired out-of-phase. When one layer expands, the other layer contracts, causing the actuator to bend, much like a bi-metal strip. In 1995, ACX, of Cambridge, Massachusetts, now a division of Cymer, Inc. , utilized this double-layer piezoelectronic technology with a passive resonant circuit to reduce vibrations in skis, marketed as the K2 "Four" ski. The same company is presently using piezoelectric actuators with an active DSP control system to reduce buffeting vibrations in the tails of high-speed jet aircraft.

Vibration and noise control using piezoelectric sensors and/or actuators attached to panels, such as those found in motor vehicles, jet engines or washing machines, is known in the art. For example, U.S. Patent No. 5,458,222, entitled "Active Vibration Control Of Structures Undergoing Bending Vibrations," discloses piezo transducers on panels, such as jet engine ducts or washing machine panels, piezo actuated by an AC signal to pre-stress a structure, such that bending vibrations are cancelled.

U.S. Patent No. 5,498,127, entitled "Active Acoustic Liner," discloses a rigid backplate that supports a piezoelectric panel around an intake fan area, driven to reduce noise in a jet engine.

U.S. Patent No. 5,812,684 , entitled "Passenger Compartment Noise Attenuation Apparatus For Use In A Motor Vehicle," discloses a piezoelectric sensor and piezoelectric actuator attached to a side glass of an automobile at points along a fundamental node of vibration, wherein the actuators are vibrated in reverse phase to a signal generated by the sensor.

U.S. Patent No. 6,138,996, entitled "Vibration Control Device For Automotive Panels," discloses a piezoelectric element used to counteract a stress of the panel created by vibration, thereby effectively increasing the rigidity of the panel. The patent also discloses use of a resonant circuit to reduce vibration.

U.S. Patent No. 6,178,246, entitled "Apparatus For The Active Suppression Of Noise Radiated By A Surface," discloses axially sensitive piezo noise sensors and a noise suppression actuator for a vehicle body wall. Further, U.S. Patents No. 5,656,882, 5,687,462, and 5,857,694 disclose piezoelectric dampers that are suitable for numerous applications.

US Patent No. 5,783,898, entitled "Piezoelectric Shunts for Simultaneous Vibration Reduction and Damping of Multiple vibration modes" discloses a device including a piezoelectric patch connected to a shunt circuitry including a plurality of energy dissipation circuit elements tuned to respective vibration frequencies.

In accordance with the present invention there is provided a resonant vibration control device for an engine cover or transmission cover, comprising:
a piezoelectric strain actuator attached to a surface of the engine cover or transmission cover, and
a resonance circuit interacting with the piezoelectric strain actuator to control, absorb or dissipate structural motion or vibration of the engine or transmission cover resulting from gear or chain-induced vibration, comprising an analog resonant circuit tuned to a resonance frequency of the engine cover or transmission cover which is desired to be controlled,
characterized in that the resonant vibration control device further comprises a piezoelectric counterforce actuator having an input coupled to the resonant circuit, such that when the circuit is driven at resonance by the piezoelectric strain actuator, the piezoelectric counterforce actuator is driven to apply a canceling force to the engine or transmission cover.

The resonant control system of the present invention directly addresses the problem of vibration, rather than noise *per se,* specifically caused by chains or gears, to decrease wear or fatigue of a transmission or engine timing cover, thereby increasing the durability and thus extending the useful life of the automotive parts.

### BRIEF DESCRIPTION OF THE DRAWING

- Fig. 1: shows a schematic view of an engine cover incorporating a vibration control device, according to an embodiment of the present invention.
- Fig. 2: shows a flow chart of a passive device for controlling vibration.

### DETAILED DESCRIPTION OF THE INVENTION

The control of dynamic displacement through both active and passive noise control strategies significantly reduces the noise, vibration and harshness (NVH) characteristics of automotive structures, and reduces airborne noise to levels well below the background noise, effectively eliminating the contributions of chain or gear (and other) excitations to the overall NVH. The present invention includes automotive applications of vibration controls to address the problem of gear or chain-induced vibration.

The present invention includes devices that provide NVH reduction through vibration control. The devices disclosed herein utilize piezoelectric strain actuators that are mounted to the vibrating structure. Typically, a structural analysis is performed to determine the location and shape of the vibrating structure, and the actuators are sized and located based on such analysis, according to methods that are well known in the art. The analysis also provides the critical vibration frequencies and the NVH associated with those frequencies.

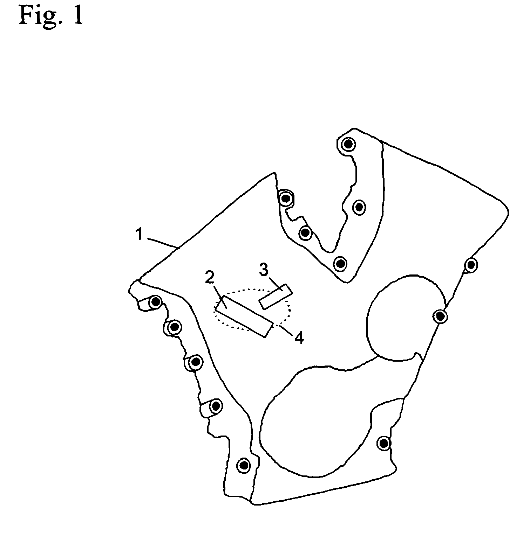

Referring to Fig. 1, a schematic view of the general application of the vibration control system of the present invention to the front cover 1 of an engine is shown. The invention includes a control circuit (not shown) that uses the piezoelectric strain actuator 2 to produce a response to structural vibration. Because the strain actuator 2 comprises a piezoelectric material, it can be used for sensing strain, as well as producing it.

Although the following examples show the use of the present invention to control vibration of a front engine (or timing chain) cover, it will be apparent from the present disclosure to one of ordinary skill in the art that the invention is applicable to a large number of other automotive engine or power train structures, such as valve covers, transmission covers, transfer case or differential covers, or any other power train cover where it is necessary to counteract vibration caused by chains or gears. The term "engine cover or transmission cover" is used herein to describe all such structures.

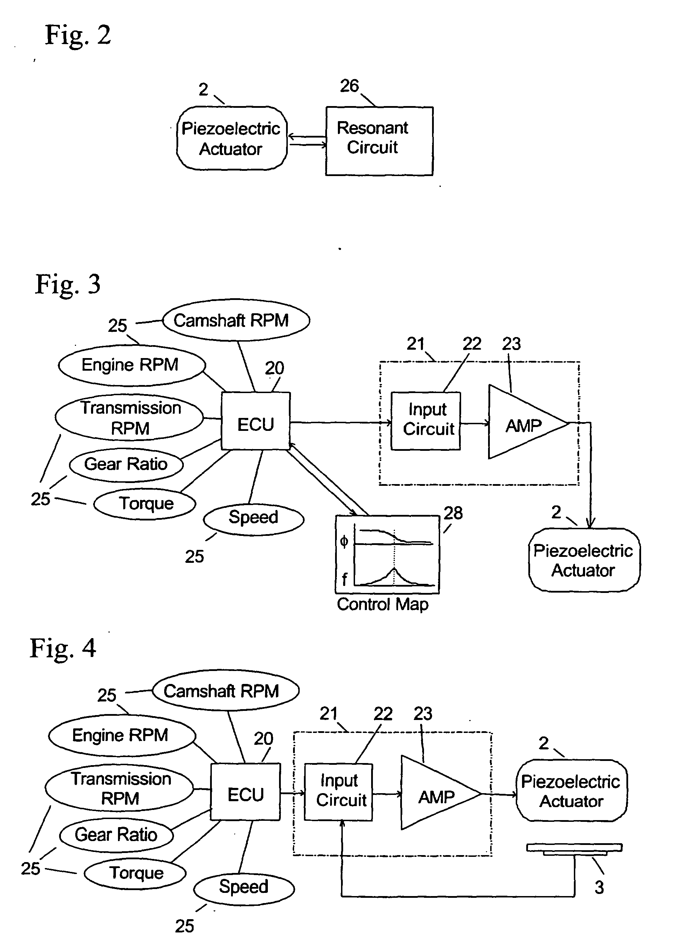

Referring to Figs. 1 and 2, a resonant control system of the present invention entails the use of a piezoelectric strain actuator 2 attached to a surface of the engine cover 1, preferably adjacent to a point of resonant vibration 4. Strain actuator 2 preferably is bonded to or similarly mounted on the surface of engine cover 1, and expands and contracts in the planar direction, in response to a drive voltage, thereby imparting strain on the surface of engine cover 1, and thus causing the cover to bend or flex. At the same time, as the cover bends and flexes in response to gear- or chain-induced vibration, the piezoelectric element generates a voltage in response to forces applied to it. A control circuit for electrically interacting with the piezoelectric strain actuator 2 is operatively connected to the strain actuator to absorb or dissipate structural motion or vibration of the engine cover 1, resulting from gear or chain-induced vibration. The control circuit includes an analog resonance circuit 26, tuned to a resonance frequency of the engine cover, which is desired to be controlled. The passive resonant circuit, as is known to the art, could comprise, for example, a resistor-inductor (RL), resistor-capacitor (RC) or inductor-capacitor circuit (LC), or one using all three elements (RLC). In this embodiment, the vibration control circuit frequency is preferably designed to match a single structural vibration resonance frequency - for example, a Ford 2.5L V-6 engine timing cover resonates at 2200 Hz, although multiple resonant circuits could be possible within the teachings of the invention. The range of frequencies to which the circuit will respond (bandwidth) can also be varied as a matter of design, as is known to the art - the circuit design is a compromise between effective damping and functional bandwidth (Q-factor).

When the engine cover 1 is excited at the fixed resonant frequency, the resulting mechanical energy input is transformed to electrical energy by the actuator 2, and a voltage is generated by the actuator 2. The voltage is transmitted to the passive resonant circuit 26, and, if the voltage is varying at or near the resonance frequency for which damping is desired, the circuitry resonates. This dissipates the energy in the resonant circuit, which effectively adds damping to the mechanical system.

According to the invention, the resonant circuit applies a countervoltage to a second piezoelectric actuator, causing it to bend and counteract the vibration. The sensing actuator and counteracting actuator may be attached as a single package, as shown at 2, or could be separate actuators located near each other, as shown at 2 and 3, respectively.

By adding such damping, the present invention consequently reduces the NVH characteristics of the engine cover, thereby increasing the durability of the engine cover and thus increasing the useful life of the part.

In an alternative embodiment, the system optionally employs a closed-loop control system with multiple feedback inputs from one or more sensors and/or engine control unit data signals. This embodiment utilizes a full feedback active vibration control system, wherein one or more actuators are mounted at vibrationally active locations on the structures for which vibration is desired to be controlled. Referring again to Fig. 1, strain actuator 2 is bonded to or similarly mounted on the surface of engine cover 1, at a point of vibration 4. The system actively powers the actuator 2 to oppose the structural motion and minimize the feedback response.

This method for active control is highly effective, particularly when additional information (*i.e.*, initial guess) about the excitation frequency is included, such as, for example, information from an accelerometer 3. For chain-induced excitation, a measured or calculated excitation frequency (*i.e*., pitch frequency) is readily available. In a fully developed system, it is also possible to utilize a full feed-forward system, based solely on the known chain excitation information.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A resonant vibration control device for an engine cover or transmission cover (1), comprising:
a piezoelectric strain actuator (2) attached to a surface of the engine cover or transmission cover, and
a resonance circuit (26) interacting with the piezoelectric strain actuator to control, absorb or dissipate structural motion or vibration of the engine or transmission cover resulting from gear or chain-induced vibration, comprising an analog resonant circuit tuned to a resonance frequency of the engine cover or transmission cover which is desired to be controlled,
**characterized in that** the resonant vibration control device further comprises a piezoelectric counterforce actuator (3) having an input coupled to the resonant circuit (26), such that when the circuit is driven at resonance by the piezoelectric strain actuator (2), the piezoelectric counterforce actuator (3) is driven to apply a canceling force to the engine or transmission cover.

2. The vibration control device of claim 1, wherein the piezoelectric strain actuator (2) is attached to the engine or transmission cover (1) adjacent to a relatively rigid part thereof.

3. The vibration control device of claim 1, wherein the piezoelectric strain actuator (2) is attached to the engine or transmission cover (1) adjacent to a point of vibration thereof.

## Patentansprüche

1. Steuervorrichtung für Resonanzschwingungen für einen Motordeckel oder Getriebedeckel (1), mit:
einem an einer Fläche des Motordeckels oder Getriebedeckels befestigten piezoelektrischen Verformungssteller (2) und
einem Resonanzkreis (26), der mit dem piezoelektrischen Verformungssteller (2) zusammenwirkt, um die durch die vom Getriebe oder von der Kette eingebrachte Schwingung entstehende Strukturbewegung oder - schwingung des Motor- oder Getriebedeckels zu steuern, aufzunehmen oder abzuleiten, der einen analogen Resonanzkreis umfasst, der auf eine Resonanzfrequenz des Motordeckels oder Getriebedeckels abgestimmt ist, die gesteuert werden soll,
**dadurch gekennzeichnet, dass** die Steuervorrichtung für Resonanzschwingungen des weiteren einen piezoelektrischen Gegenkraftsteller (3) mit einem an den Resonanzkreis (26) angeschlossenen Eingang umfasst, derart dass dann, wenn der Schaltkreis bei Resonanz durch den piezoelektrischen Verformungssteller (2) angesteuert wird, der piezoelektrische Gegenkraftsteller (3) derart angesteuert wird, dass er eine Löschkraft auf den Motor- oder den Getriebedeckel aufbringt.

2. Steuervorrichtung für Resonanzschwingungen nach Anspruch 1, wobei der piezoelektrische Verformungssteller (2) an dem Motor- oder dem Getriebedeckel (1) angrenzend an ein relativ starres Teil desselben befestigt ist.

3. Steuervorrichtung für Resonanzschwingungen nach Anspruch 1, wobei der piezoelektrische Verformungssteller (2) an dem Motor- oder dem Getriebedeckel (1) angrenzend an einen Schwingungspunkt desselben befestigt ist.

## Revendications

1. Dispositif de commande de vibrations à la résonance destiné à un cache de moteur ou un carter de transmission (1), comprenant :
un actionneur à contrainte piézoélectrique (2) fixé à une surface du cache du moteur ou du carter de la transmission, et
un circuit de résonance (26) interagissant avec l'actionneur à contrainte piézoélectrique pour commander, absorber ou dissiper un mouvement ou une vibration de structure du cache du moteur ou du carter de transmission, résultant d'une vibration provoquée par des engrenages ou des chaînes, comprenant un circuit résonant analogique accordé sur une fréquence de résonance du cache de moteur ou du carter de transmission que l'on souhaite maîtriser,
**caractérisé en ce que** le dispositif de commande de vibrations à la résonance comprend en outre un actionneur de contre-force piézoélectrique (3) ayant une entrée reliée au circuit résonant (26), de telle sorte que lorsque le circuit est attaqué à la résonance par l'actionneur à contrainte piézoélectrique (2), l'actionneur de contre-force piézoélectrique (3) est commandé pour appliquer une force d'annulation sur le cache du moteur ou le carter de transmission.

2. Dispositif de commande de vibrations selon la revendication 1, dans lequel l'actionneur à contrainte piézoélectrique 2 est fixé au cache du moteur ou au carter de transmission (1) de façon adjacente à une partie relativement rigide de celui-ci.

3. Dispositif de commande de vibrations selon la revendication 1, dans lequel l'actionneur à contrainte piézoélectrique 2 est fixé au cache de moteur ou au carter de transmission (1) à proximité d'un point de vibration de celui-ci.
